# EUROPÄISCHE PATENTSCHRIFT

(11) **EP 1 610 154 B1**
(45) Veröffentlichungstag und Bekanntmachung des Hinweises auf die Patenterteilung: **06.03.2013**
(21) Anmeldenummer: 05012177.1
(22) Anmeldetag: 07.06.2005
(51) Int. Cl.: G01V 8/10

(54) **Optischer Sensor**
Optical sensor
Capteur optique

(30) Priorität: 25.06.2004 DE 102004030777
(43) Veröffentlichungstag der Anmeldung: 28.12.2005
(73) Patentinhaber: Leuze electronic GmbH + Co KG, 73277 Owen/Teck (DE)
(72) Erfinder: Klaiber, Jörg, 71157 Hildrizhausen (DE); Schwartz, Günther, 73235 Weilheim/Teck (DE)
(74) Vertreter: Ruckh, Rainer Gerhard

(56) Entgegenhaltungen:
- EP-A- 0 635 810
- EP-A- 0 717 292
- DE-A1- 19 806 722
- DE-C- 920 919
- DE-U- 1 894 761
- DE-U1- 9 113 638
- DE-U1- 9 401 413
- FR-A- 2 645 266

## Beschreibung

Die Erfindung betrifft einen optischen Sensor gemäß dem Oberbegriff des Anspruchs 1.

Derartige optische Sensoren können insbesondere als Lichtschranken, Lichttaster, Reflexionslichtschranken oder Distanzsensoren ausgebildet sein. Bei einem als Lichtschranke ausgebildeten optischen Sensor sind der Sender und der Empfänger in separaten Gehäusen an gegenüberliegenden Enden des Überwachungsbereichs angeordnet, wobei Objekte im Überwachungsbereich durch eine Strahlunterbrechung der Sendelichtstrahlen detektiert werden. Bei optischen Sensoren, welche als Lichttaster, Reflexionslichtschranken oder Distanzsensoren ausgebildet sind, sind der Sender und der Empfänger in einem gemeinsamen Gehäuse integriert.

In jedem Fall ist in einer Wand eines derartigen Gehäuses eines optischen Sensors wenigstens ein Austrittsfenster integriert, durch welches die Sendelichtstrahlen und/oder die Empfangslichtstrahlen geführt sind.

Je nach Ausführungsform des optischen Sensors besteht das Gehäuse aus Metall oder Kunststoff. Das Gehäuse weist in einer Wand einen Durchbruch auf, der an die Geometrie des jeweiligen Austrittsfensters angepasst ist. Zur Montage des Gehäuses wird das Austrittsfenster in den Durchbruch eingelegt und mittels eines Klebeprozesses oder mittels eines Ultraschall-Schweißverfahrens in der Wand des Gehäuses fixiert.

Nachteilig hierbei ist, dass die Güte der Nahtstellen zwischen Gehäuse und dem Austrittsfenster von der Prozesssicherheit des Klebe- oder Schweißprozesses abhängig ist, wobei bei Prozessschwankungen häufig eine mangelhafte Dichtheit der Nahtstellen erhalten wird. Auch die Haltekraft der Verbindungsstruktur zwischen Austrittsfenster und Gehäuse variiert mit den genannten Prozessschwankungen, so dass auch eine Gefahr des Herauslösens des Austrittsfensters aus der Gehäusewand gegeben ist.

Die Austrittsfenster bestehen typischerweise aus spritzgegossenen Kunststoffscheiben, welche in Spritzgussverfahren kostengünstig herstellbar sind. Nachteilig bei derartigen Austrittsfenstern ist jedoch, dass diese über ihre Fläche keine homogenen Polarisationseigenschaften aufweisen, das heißt die Polarisation der Sendelichtstrahlen und Empfangslichtstrahlen wird bei Durchgang durch das Austrittsfenster abhängig von deren Auftreffpunkt auf dem Austrittsfenster beeinflusst. Dies ist insbesondere dann nachteilig, wenn zur Objektdetektion mit dem optischen Sensor Sendelichtstrahlen mit vorgegebenen Polarisationszuständen eingesetzt werden, welche bei Durchtritt durch das Austrittsfenster in nicht definierter Weise geändert werden und so zu einer unerwünschten Beeinträchtigung der Nachweisempfindlichkeit des optischen Sensors führen.

Diese nachteiligen Eigenschaften des Austrittsfensters werden bei Einbau in das Gehäuse noch verstärkt, da bei Einfügen des Austrittsfensters in den Durchbruch der Gehäusewand Spannungen im Austrittsfenster auftreten können, die die inhomogenen Polarisationseigenschaften des Austrittsfensters noch verstärken.

Um derartige Austrittsfenster dennoch in den genannten optischen Sensor einzusetzen, ist eine aufwändige Selektion der Austrittsfenster notwendig. Abgesehen davon, dass hierdurch die Qualität der Austrittsfenster nur unzureichend gesteigert werden kann, entstehen bei derartigen Verfahren hohe Ausschussraten, was zu einer Erhöhung der Herstellkosten führt.

Die DE 91 13 638 U1 betrifft ein folienartiges Bauteil wie eine Fresnellinse, Blende oder Abdeckung. Der Rand des folienartigen Bauteils ist mit Profilierungen, Ausnehmungen oder Durchbrechungen versehen. Dieses Bauteil wird in einem Spritzwerkzeug mit Kunststoff umspritzt, wobei dieser eingespritzte Kunststoff das Gehäuse eines Bewegungsmelders oder dergleichen bildet.

Die DE 94 01 413 U1 betrifft eine optoelektronische Vorrichtung mit einem Sendelichtstrahlen emittierenden und/oder Empfangslichtstrahlen empfangenden Sensorelement, wobei das Sensorelement in einem Gehäuse angeordnet ist, und wobei in einem Gehäuseteil des Gehäuses wenigstens ein Austrittsfenster integriert ist. Das Gehäuseteil und das Austrittsfenster sind einteilig ausgebildet und bestehen aus einem Kunststoffspritzgussteil.

Die DE-U-189 476 betrifft eine Schauscheibeneinfassung für Gehäuse elektrischer Geräte aus einem thermoplastischen Kunststoff. Die Einfassung hat an einzelnen Stellen Ansätze, die zur Befestigung der Scheibe an dem Gehäuse durch thermoplastische Verformung dienen.

Die DE-C-920 919 betrifft ein Isoliergehäuse mit einem Schauglas. Das Schauglas wird in eine Öffnung des Gehäuses eingesetzt und durch nachfolgendes Einspritzen oder Einspritzen von Kunststoff in der Öffnung fixiert.

Die DE 198 06 722 A1 betrifft einen Sensor mit einem Gehäuse und einem Abdeckteil, das mit dem Gehäuse dichtend verbunden werden kann.

Der Erfindung liegt die Aufgabe zugrunde, einen optischen Sensor der eingangs genannten Art bereitzustellen, welcher einfach und kostengünstig herstellbar ist und dabei definierte, reproduzierbare optische Eigenschaften aufweist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße optische Sensor dient zur Erfassung von Objekten in einem Überwachungsbereich. Der optische Sensor weist einen Sendelichtstrahlen emittierenden Sender, einen Empfangslichtstrahlen empfangenden Empfänger und eine Auswerteeinheit auf, in welcher die am Ausgang des Empfängers anstehenden Empfangssignale zur Generierung eines Objektfeststellungssignals ausgewertet werden. Der Sender und der Empfänger mit der Auswerteeinheit sind in wenigstens einem Gehäuse integriert. Die Sendelichtstrahlen und die Empfangslichtstrahlen sind durch wenigstens ein Austrittsfenster in einer Wand des Gehäuses geführt. Das Austrittsfenster ist von einer extrudierten oder gegossenen Kunststoffscheibe gebildet. Das Gehäuse weist wenigstens ein Spritzgussteil auf, welches in einem Spritzgussverfahren durch Umspritzen der Kunststoffscheibe hergestellt ist.

Die durch Extrudieren oder Gießen hergestellte Kunststoffscheibe bildet ein Austrittsfenster, welches keine Vorzugsrichtung hinsichtlich der Polarisation der durchtretenden Sendelichtstrahlen und/oder Empfangslichtstrahlen aufweist, wobei das Austrittsfenster diesbezüglich über seine gesamte Fläche homogene optische Eigenschaften aufweist. Besonders vorteilhaft werden Kunststoffscheiben aus PMMA zur Herstellung des Austrittsfenster verwendet, wodurch besonders gute optische Eigenschaften des Austrittsfenster erhalten werden.

Damit wird erreicht, dass die Polarisationseigenschaften der Sendelichtstrahlen und Empfangslichtstrahlen bei Durchtritt durch das Austrittsfenster erhalten werden. Insbesondere bei optischen Sensoren, bei welchen zur Detektion von Objekten polarisierte Sendelichtstrahlen beziehungsweise Empfangslichtstrahlen eingesetzt werden, wird dadurch eine gute und reproduzierbare Nachweisempfindlichkeit erhalten.

Ein weiterer wesentlicher Vorteil des erfindungsgemäßen optischen Sensors besteht darin, dass durch das Umspritzen der Austrittsfenster zur Herstellung des Gehäuses und des Gehäuseteils ein guter und sicherer Halt des Austrittsfensters in der Wand des Gehäuses erhalten wird. Besonders vorteilhaft hierbei ist, dass durch diesen Herstellprozess die Nahtstelle zwischen Gehäuse und Austrittsfenster sehr dicht abschließt, so dass ein Eindringen von Schmutz oder Feuchtigkeit in den Innenraum des Gehäuses vermieden wird. Somit können für derartige optische Sensoren ohne weitere Nacharbeiten der Nahtstellen die für den industriellen Einsatz geforderten Schutzklassen, insbesondere IP65 oder IP67, eingehalten werden.

Weiterhin ist vorteilhaft, dass der Herstellprozess des Gehäuses mit dem integrierten Austrittsfenster einfach und kostengünstig bei einem Geringstmaß an Prozessschritten durchführbar ist. Insbesondere ist vorteilhaft, dass bei diesem Herstellungsprozess das Austrittsfenster in dem Gehäuse integrierbar ist, ohne dass hierbei nennenswerte Spannungen im Austrittsfenster generiert werden.

Der erfindungsgemäße optische Sensor kann generell als Lichtschranke, Lichttaster, Reflexionslichtschranke, Distanzsensor oder dergleichen ausgebildet sein. Dabei kann der Sender des optischen Sensors im einfachsten Fall aus einem einzelnen Sendelichtstrahlen emittierenden Sendeelement und der Em-pfänger aus einem einzelnen Empfangslichtstrahlen empfangenden Empfangselement bestehen. Generell kann der optische Sensor auch dahingehend weitergebildet sein, dass der Sender aus einer Mehrfachanordnung von Sendelichtstrahlen emittierenden Sendeelementen und/oder der Empfänger aus einer Mehrfachanordnung von Empfangslichtstrahlen empfangenden Empfangselementen besteht. Entsprechend der jeweiligen Ausführungsform des optischen Sensors kann dieser eine unterschiedliche Anzahl von Gehäusen und darin integrierten Austrittsfenster aufweisen, wobei diese Austrittsfenster jeweils extrudiert oder gegossen sind und durch Umspritzen in einer Wand des Gehäuses integriert sind.

Die Erfindung wird im Nachstehenden anhand der Zeichnungen erläutert. Es zeigen:
- Figur 1:: Schematische Darstellung eines als Reflexionslichtschranke ausgebildeten optischen Sensors.
- Figur 2:: Schematische Darstellung eines als Lichtschranke ausgebildeten optischen Sensors.
- Figur 3:: Perspektivische Darstellung eines Gehäuseteils mit integriertem Austrittsfenster eines optischen Sensors gemäß den Figuren 1 und 2.
- Figur 4 :: Längsschnitt durch das Gehäuseteil gemäß Figur 3.

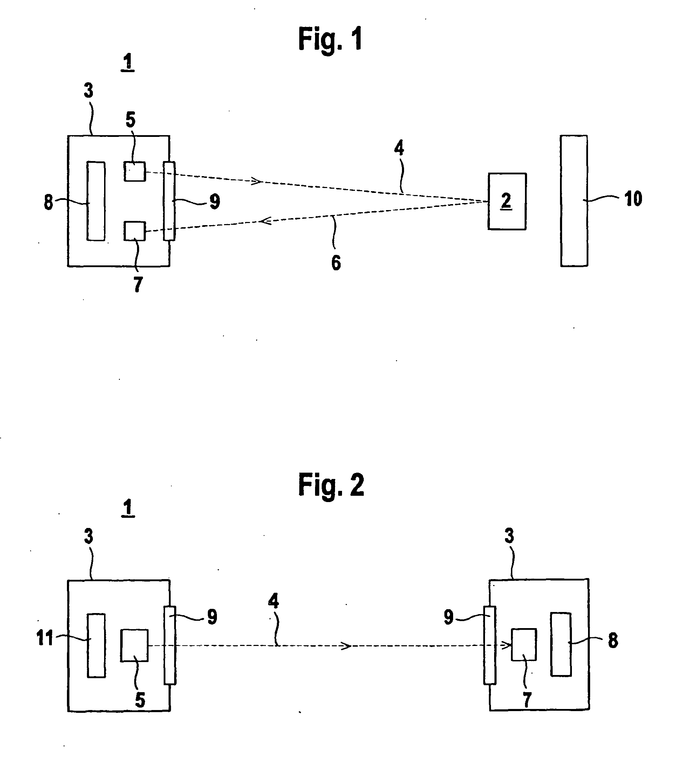

Figur 1 zeigt schematisch einen als Reflexionslichtschranke ausgebildeten optischen Sensor 1. Der optische Sensor 1 dient zur Erfassung von Objekten 2 in einem Überwachungsbereich und weist ein Gehäuse 3 auf, in welchem ein Sendelichtstrahlen 4 emittierender Sender 5, ein Empfangslichtstrahlen 6 empfangender Empfänger 7 und eine Auswerteeinheit 8 integriert sind. Der Sender 5 besteht beispielsweise aus einer Leuchtdiode, der Empfänger 7 aus einer Fotodiode oder dergleichen. Die Auswerteeinheit 8 besteht aus einem Microcontroller, ASIC oder dergleichen und dient einerseits zur Ansteuerung des Senders 5 und andererseits zur Auswertung der am Ausgang des Empfängers 7 anstehenden Empfangssignale.

Das Gehäuse 3 des optischen Sensors 1 ist an einem Rand des Überwachungsbereichs angeordnet, wobei in der dem Überwachungsbereich zugewandten Frontwand des Gehäuses 3 ein Austrittsfenster 9 integriert ist. Der gegenüberliegende Rand des Überwachungsbereichs ist von einem Reflektor 10 begrenzt, der Bestandteil des optischen Sensors 1 ist.

Bei freiem Überwachungsbereich durchsetzen die durch das Austrittsfenster 9 geführten Sendelichtstrahlen 4 ungehindert den Überwachungsbereich, werden am Reflektor 10 reflektiert und gelangen als Empfangslichtstrahlen 6 durch das Austrittsfenster 9 zum Empfänger 7.

Befindet sich wie in Figur 1 dargestellt ein Objekt 2 im Überwachungsbereich, so gelangen die Sendelicbtstrahlen 4 nicht mehr zum Reflektor 10, sondern werden als Empfangslichtstrahlen 6 vom Objekt 2 zum Empfänger 7 zurückreflektiert.

In der Auswerteeinheit 8 wird durch Bewertung der Amplitude des Empfangssignals mit wenigstens einem Schwellwert ein binäres Objektfeststellungssignal generiert, dessen Schaltzustände angeben, ob sich ein Objekt 2 im Überwachungsbereich befindet oder nicht.

Bei dem optischen Sensor 1 gemäß Figur 1 kann dem Sender 5 eine nicht dargestellte Sendeoptik zur Strahlformung der Sendelichtstrahlen 4 nachgeordnet sein. Weiterhin kann dem Empfänger 7 eine ebenfalls nicht dargestellte Empfangsoptik zur Fokussierung der Empfangslichtstrahlen 6 vorgeordnet sein. Schließlich können vor dem Sender 5 und dem Empfänger 7 jeweils nicht dargestellte Polarisationsfilter angeordnet sein, mittels derer definierte Polarisationseigenschaften der Sendelichtstrahlen 4 und Empfangslichtstrahlen 6 zur Erhöhung der Nachweisempfindlichkeit des optischen Sensors 1 erhalten werden.

Figur 2 zeigt schematisch einen als Lichtschranke ausgebildeten optischen Sensor 1. In diesem Fall sind der Sender 5 und der Empfänger 7 des optischen Sensors 1 in separaten Gehäusen 3 integriert, wobei diese an gegenüberliegenden Rändern des Überwachungsbereichs angeordnet sind. Der Sender 5 wird im vorliegenden Fall von einer Steuereinheit 11 angesteuert. Die Empfangssignale des Empfängers 7 werden in der Auswerteeinheit 8 ausgewertet. Die Ausführungen der optischen und elektrischen Komponenten entsprechen ansonsten der Ausführungsform gemäß Figur 1.

In der Frontwand des sendeseitigen Gehäuses 3 befindet sich ein Austrittsfenster 9, durch welches die vom Sender 5 emittierten Sendelichtstrahlen 4 in den Überwachungsbereich geführt sind. Bei freiem Überwachungsbereich gelangen die Sendelichtstrahlen 4 ungeschwächt zum empfangsseitigen Gehäuse 3, durchsetzen ein in der Frontwand dieses Gehäuses 3 integriertes Austrittsfenster 9 und gelangen dann zum Empfänger 7. Bei einem im Überwachungsbereich angeordneten Objekt 2 werden die Sendelichtstrahlen 4 an dem Objekt 2 reflektiert und gelangen nicht mehr zum Empfänger 7.

In der Auswerteeinheit 8 wird wiederum durch eine Schwellwertbewertung ein binäres Objektfeststellungssignal generiert, dessen Schaltzustände angeben, ob sich ein Objekt 2 im Überwachungsbereich befindet oder nicht.

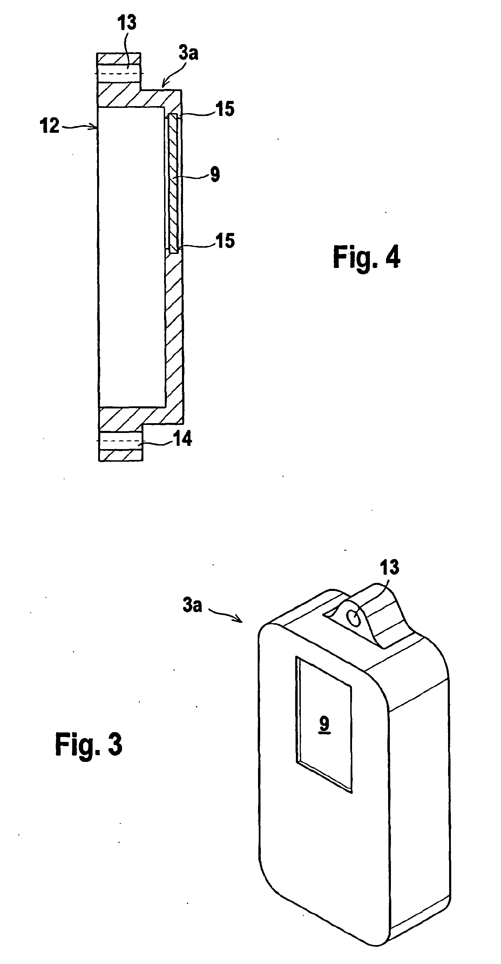

Die Figuren. 3 und 4 zeigen ein Gehäuseteil 3a zur Ausbildung eines Gehäuses 3 eines optischen Sensors 1 gemäß den Figuren 1 und 2. Das dargestellte Gehäuseteil 3a besteht aus Kunststoff. Das Gehäuse 3 ist dabei als Spritzgussteil ausgebildet.

Wie aus den Figuren 3 und 4 ersichtlich, bildet das Gehäuseteil 3a das Vorderteil des Gehäuses 3 des optischen Sensors 1, wobei die Frontwand und die anschließenden Seitenwände des Gehäuses 3 von dem Gehäuseteil 3a gebildet sind.

Das Gehäuseteil 3a weist die Form einer Schale auf, welche an ihrer Rückseite offen ist. Über die rückseitige Öffnung 12 können die optischen und elektrischen Komponenten des optischen Sensors 1 in das Gehäuseteil 3a eingeführt werden. Zur Endmontage des optischen Sensors 1 wird die rückseitige Öffnung 12 des Gehäuseteils 3a mit einem Gehäusedeckel verschlossen. Das Gehäuseteil 3a und der Gehäusedeckel bestehen vorzugsweise aus demselben Werkstoff.

Wie aus den Figuren 3 und 4 ersichtlich, weist das Gehäuseteil 3a an gegenüberliegenden Seitenwänden Durchgangsbohrungen 13, 14 auf, mittels derer der optische Sensor 1 an einer Unterlage befestigbar ist.

Zur Ausbildung dieser Befestigungsmittel ist das Gehäuseteil 3a im Bereich dieser Seitenwände zur Außenseite hin verbreitert, wodurch über die Gehäusewände hervorstehende Laschen entstehen, in welche die Durchgangsbohrungen 13, 14 eingearbeitet sind.

Das Gehäuseteil 3a weist an seiner Vorderseite, welche die Frontseite des Gehäuses 3 des optischen Sensors 1 bildet, einen Durchbruch auf, in welchem ein Austrittsfenster 9 integriert ist.

Das Austrittsfenster 9 besteht aus einer extrudierten oder gegossenen Kunststoffscheibe.

Die Kunststoffscheibe besteht im vorliegenden Fall aus PMMA, wobei generell auch Kunststoffe mit vergleichbaren Eigenschaften hierfür verwendbar sind.

Die Kunststoffscheibe ist in jedem Fall für die Wellenlängen der verwendeten Sendelichtstrahlen 4, die typischerweise im Infrarotbereich liegen, lichtdurchlässig. Dabei kann die Kunststoffscheibe klarsichtig oder eingefärbt sein.

Durch die Herstellung der Kunststoffscheibe durch Extrudieren oder Gießen weist diese über ihre gesamte Fläche keine Vorzugsrichtung bezüglich der Polarisation von durchgehendem Licht auf. Demzufolge bleibt der Polarisationszustand von Sendelichtstrahlen 4 und Empfangslichtstrahlen 6, die ein aus dieser Kunststoffscheibe gebildetes Austrittsfenster 9 durchsetzen, erhalten.

Das Austrittsfenster 9 gemäß den Figuren 3 und 4 weist einen rechteckigen Querschnitt auf, wobei die Dicke des Austrittsfensters 9 über die gesamte Querschnittsfläche konstant ist. Die Kunststoffscheiben zur Ausbildung derartiger Austrittsfenster 9 können durch Zusägen größerer Kunststoffplatten einfach und schnell konfektioniert werden. Dabei ist insbesondere vorteilhaft, dass bei der Konfektionierung der Austrittsfenster 9 nur wenig Ausschuss bei der Verarbeitung der Kunststoffscheiben anfällt.

Die Herstellung des Gehäuseteils 3a mit dem integrierten Austrittsfenster 9 erfolgt in einem Prozessschritt, indem das Austrittsfenster 9 als Einlegeteil in einer Spritzgussform mit dem Kunststoff zur Ausbildung umspritzt wird.

Mit diesem Herstellungsprozess kann das Austrittsfenster 9 nahezu spannungsfrei im Gehäuse 3 integriert werden.

Wie aus Figur 4 ersichtlich, wird das Austrittsfenster 9 derartig mit Kunststoff umspritzt, dass im Bereich des Durchbruchs am Rand des Gehäuseteils 3a eine Nut 15 gebildet wird, in welcher der Rand des Austrittsfensters 9 liegt. Dabei läuft die Nut 15 über den gesamten Rand des Austrittsfensters 9 um. Durch das Umspritzen des Austrittsfensters 9 liegt das dadurch hergestellte Gehäuseteil 3a im Bereich der Nut 15 dicht am Rand des Austrittsfensters 9 an, so dass die Nahtstelle zwischen Austrittsfenster 9 und Gehäuseteil 3a dicht gegen Eindringen von Feuchtigkeit oder Schmutz ist. Damit sind keine weiteren Komponenten zur Abdichtung dieser Nahtstelle erforderlich.

### Bezugszeichenliste

- (1): Optischer Sensor
- (2): Objekt
- (3): Gehäuse
- (3a): Gehäuseteil
- (4): Sendelichtstrahlen
- (5): Sender
- (6): Empfangslichtstrahlen
- (7): Empfänger
- (8): Auswerteeinheit
- (9): Austrittsfenster
- (10): Reflektor
- (11): Steuereinheit
- (12): Öffnung
- (13): Durchgangsbohrung
- (14): Durchgangsbohrung
- (15): Nut

## Patentansprüche

1. Optischer Sensor zur Erfassung von Objekten in einem Überwachungsbereich mit einem Sendelichtstrahlen emittierenden Sender, mit einem Empfangslichtstrahlen empfangenden Empfänger, und mit einer Auswerteeinheit, in welcher die am Ausgang des Empfängers anstehenden Empfangssignale zur Generierung eines Objektfeststellungssignals ausgewertet werden, wobei der Sender und der Empfänger mit der Auswerteeinheit in wenigstens einem Gehäuse integriert sind, und wobei die Sendelichtstrahlen und die Empfangslichtstrahlen durch wenigstens ein Austrittsfenster in einer Wand des Gehäuses geführt sind, **dadurch gekennzeichnet, dass** das Austrittsfenster (9) von einer extrudierten oder gegossenen Kunststoffscheibe gebildet ist, welche keine Vorzugsrichtung hinsichtlich der Polarisation der durchtretenden Sendelichtstrahlen (4) und/oder Empfangslichtstrahlen (5) aufweist, und dass das Gehäuse (3) wenigstens ein Spritzgussteil aufweist, welches in einem Spritzgussverfahren durch Umspritzen der Kunststoffscheibe hergestellt ist.

2. Optischer Sensor nach Anspruch 1, **dadurch gekennzeichnet, dass** die Kunststoffscheibe aus PMMA besteht.

3. Optischer Sensor nach einem der Ansprüche 1 oder 2, **dadurch gekennzeichnet, dass** die Kunststoffscheibe klarsichtig ist.

4. Optischer Sensor nach einem der Ansprüche 2 oder 3, **dadurch gekennzeichnet, dass** die Kunststoffscheibe einen rechteckigen Querschnitt aufweist.

5. Optischer Sensor nach Anspruch 4, **dadurch gekennzeichnet, dass** die Kunststoffscheibe durch Zusägen einer Kunststoffplatte konfektionierbar ist.

6. Optischer Sensor nach einem der Ansprüche 1 - 5, **dadurch gekennzeichnet, dass** durch das Umspritzen der Kunststoffscheibe eine Nut (15) in der Gehäusewand gebildet wird, in welcher der Rand des Austrittsfensters (9) dicht anliegt.

7. Optischer Sensor nach Anspruch 6, **dadurch gekennzeichnet, dass** die Nut (15) entlang des gesamten Randes des Austrittsfensters (9) umläuft.

8. Optischer Sensor nach einem der Ansprüche 1 - 7, **dadurch gekennzeichnet, dass** dieser als Lichttaster, Reflexionslichtschranke oder als Distanzsensor ausgebildet ist.

9. Optischer Sensor nach Anspruch 8, **dadurch gekennzeichnet, dass** der Sender (5), der Empfänger (7) und die Auswerteeinheit (8) in einem gemeinsamen Gehäuse (3) integriert sind.

10. Optischer Sensor nach Anspruch 9, **dadurch gekennzeichnet, dass** in einer Wand des Gehäuses (3) das Austrittsfenster (9) gelagert ist, durch welches die Sendelichtstrahlen (4) und die Empfangslichtstrahlen (6) geführt sind.

11. Optischer Sensor nach Anspruch 9, **dadurch gekennzeichnet, dass** die Sendelichtstrahlen (4) und die Empfangslichtstrahlen (6) durch separate Austrittsfenster (9) in wenigstens einer Wand des Gehäuses (3) geführt sind.

12. Optischer Sensor nach einem der Ansprüche 1 - 7, **dadurch gekennzeichnet, dass** dieser als Lichtschranke ausgebildet ist.

13. Optischer Sensor nach Anspruch 12, **dadurch gekennzeichnet, dass** der Sender (5) und der Empfänger (7) in getrennten Gehäusen (3) mit jeweils einem Austrittsfenster (9) integriert sind.

14. Optischer Sensor nach einem der Ansprüche 1 - 13, **dadurch gekennzeichnet, dass** der Sender (5) von einer Mehrfachanordnung mit Sendelichtstrahlen (4) emittierenden Sendeelementen gebildet ist.

15. Optischer Sensor nach einem der Ansprüche 1-14, **dadurch gekennzeichnet, dass** der Empfänger (7) von einer Mehrfachanordnung mit Empfangslichtstrahlen (6) empfangenden Empfangselementen gebildet ist.

## Claims

1. Optical sensor for detecting objects in a monitoring region, comprising a transmitter emitting transmitted light beams, a receiver receiving received light beams, and an evaluating unit in which the received signals present at the output of the receiver are evaluated for generation of an object detection signal, wherein the transmitter and the receiver together with the evaluating unit are integrated in at least one housing and wherein the transmitted light beams and the received light beams are guided through at least one exit window in a wall of the housing, **characterised in that** the exit window (9) is formed by an extruded or cast synthetic material pane, which does not have a preferential direction with respect to polarisation of the transmitted light beams (4) and/or received light beams (5) passing through and that the housing (3) comprises at least one injection-moulded part which is produced in an injection-moulding process by injection-moulding around of the synthetic material pane.

2. Optical sensor according to claim 1, **characterised in that** the synthetic material pane consists of PMMA.

3. Optical sensor according to one of claims 1 and 2, **characterised in that** the synthetic material pane is transparent.

4. Optical sensor according to one of claims 2 and 3, **characterised in that** the synthetic material pane has a rectangular cross-section.

5. Optical sensor according to claim 4, **characterised in that** the synthetic material pane can be produced by sawing up a synthetic material plate.

6. Optical sensor according to any one of claims 1 to 5, **characterised in that** a groove (15) in which the edge of the exit window (9) sealingly bears is formed in the housing wall by the injection-moulding around of the synthetic material pane.

7. Optical sensor according to claim 6, **characterised in that** the groove (15) runs around along the entire edge of the exit window (9).

8. Optical sensor according to any one of claims 1 to 7, **characterised in that** this is constructed as an optical scanner, a reflection light barrier or a distance sensor.

9. Optical sensor according to claim 8, **characterised in that** the transmitter (5), the receiver (7) and the evaluating unit (8) are integrated in a common housing (3).

10. Optical sensor according to claim 9, **characterised in that** the exit window (9) through which the transmitted light beams (4) and the received light beams (6) are guided is mounted in a wall of the housing (3).

11. Optical sensor according to claim 9, **characterised in that** the transmitted light beams (4) and the received light beams (6) are guided through separate exit windows (9) in at least one wall of the housing (3).

12. Optical sensor according to any one of claims 1 to 7, **characterised in that** this is constructed as a light barrier.

13. Optical sensor according to claim 12, **characterised in that** the transmitter (5) and the receiver (7) are integrated in separate housings (3) each with a respective exit window (9).

14. Optical sensor according to any one of claims 1 to 13, **characterised in that** the transmitter (5) is formed by a multiple arrangement with transmitting elements emitting transmitted light beams (4).

15. Optical sensor according to any one of claims 1 to 14, **characterised in that** the receiver (7) is formed by a multiple arrangement with receiving elements receiving received light beams (6).

## Revendications

1. Capteur optique pour la détection d'objets dans une zone de surveillance, comprenant un émetteur émettant des rayons lumineux d'émission, un récepteur recevant des rayons lumineux de réception et une unité d'évaluation dans laquelle les signaux de réception présents à la sortie du récepteur sont évalués afin de générer un signal de détection d'objet, l'émetteur et le récepteur étant intégrés avec l'unité d'évaluation dans au moins un boîtier, et les rayons lumineux d'émission et les rayons lumineux de réception étant guidés à travers au moins une fenêtre de sortie dans une paroi du boîtier, **caractérisé en ce que** la fenêtre de sortie (9) est formée par une vitre en matière plastique extrudée ou moulée qui ne présente pas de direction préférentielle en ce qui concerne la polarisation des rayons lumineux d'émission (4) et/ou des rayons lumineux de réception (5) qui la traversent, et que le boîtier (3) présente au moins une pièce moulée par injection qui est fabriquée dans un procédé de moulage par injection par surmoulage de la vitre en matière plastique.

2. Capteur optique selon la revendication 1, **caractérisé en ce que** la vitre en matière plastique est en PMMA.

3. Capteur optique selon une des revendications 1 ou 2, **caractérisé en ce que** la vitre en matière plastique en transparente.

4. Capteur optique selon une des revendications 2 ou 3, **caractérisé en ce que** la vitre en matière plastique présente une section transversale rectangulaire.

5. Capteur optique selon la revendication 4, **caractérisé en ce que** la vitre en matière plastique peut être confectionnée par sciage d'une plaque en matière plastique.

6. Capteur optique selon une des revendications 1 à 5, **caractérisé en ce qu'**il est formé dans la paroi de boîtier, par le surmoulage de la vitre en matière plastique, une rainure (15) dans laquelle le bord de la fenêtre de sortie (9) s'applique de façon étanche.

7. Capteur optique selon la revendication 6, **caractérisé en ce que** la rainure (15) s'étend tout le long du bord de la fenêtre de sortie (9).

8. Capteur optique selon une des revendications 1 à 7, **caractérisé en ce que** celui-ci est réalisé sous forme de détecteur optique, de barrière photoélectrique à réflexion ou de capteur de distance.

9. Capteur optique selon la revendication 8, **caractérisé en ce que** l'émetteur (5), le récepteur (7) et l'unité d'évaluation (8) sont intégrés dans un boîtier commun (3).

10. Capteur optique selon la revendication 9, **caractérisé en ce que** la fenêtre de sortie (9) à travers laquelle les rayons lumineux d'émission (4) et les rayons lumineux de réception (6) sont guidés est montée dans une paroi du boîtier (3).

11. Capteur optique selon la revendication 9, **caractérisé en ce que** les rayons lumineux d'émission (4) et les rayons lumineux de réception (6) sont guidés à travers des fenêtres de sortie (9) séparées dans au moins une paroi du boîtier (3).

12. Capteur optique selon une des revendications 1 à 7, **caractérisé en ce que** celui-ci est réalisé sous forme de barrière photoélectrique.

13. Capteur optique selon la revendication 12, **caractérisé en ce que** l'émetteur (5) et le récepteur (7) sont intégrés dans des boîtiers (3) séparés ayant chacun une fenêtre de sortie (9).

14. Capteur optique selon une des revendications 1 à 13, **caractérisé en ce que** l'émetteur (5) est formé par un arrangement multiple d'éléments émetteurs émettant des rayons lumineux d'émission (4).

15. Capteur optique selon une des revendications 1 à 14, **caractérisé en ce que** le récepteur (7) est formé par un arrangement multiple d'éléments récepteurs recevant des rayons lumineux de réception (6).
